**Europäisches Patentamt**

**European Patent Office**

**Office européen des brevets**

(11) Veröffentlichungsnummer: **0 173 061**
A1

(12) # EUROPÄISCHE PATENTANMELDUNG

(21) Anmeldenummer: **85108988.8**

(22) Anmeldetag: **18.07.85**

(51) Int. Cl.⁴: **B 01 J 2/22**, C 09 C 1/30

(30) Priorität: **30.08.84 DE 3431865**

(43) Veröffentlichungstag der Anmeldung: **05.03.86**
**Patentblatt 86/10**

(84) Benannte Vertragsstaaten: **BE DE FR GB**

(71) Anmelder: **Degussa Aktiengesellschaft,**
**Weissfrauenstrasse 9, D-6000 Frankfurt am Main 1 (DE)**

(72) Erfinder: **Kreher, Alfons, Dr., Am Kappelgarten 19,**
**D-6000 Frankfurt 60 (DE)**
Erfinder: **Nagel, Werner, Dr., Vogelsbergstrasse 39,**
**D-8755 Alzenau (DE)**
Erfinder: **Brandt, Bernd, Höhenring 34,**
**D-5357 Swisttal 1 (DE)**
Erfinder: **Peters, Albert, Berliner Strasse 29,**
**D-5042 Erftstadt (DE)**

(54) **Verfahren und Vorrichtung zum Granulieren von pulverförmigen Stoffen.**

(57) Feinteilige, pulverförmige Stoffe, wie z.B. gefällte Kieselsäuren, werden mittels zweier Walzen (10, 11), von denen eine eine Filterfläche und die andere einen profilierten Mantel aufweisen, granuliert, wobei die Achsen dieser Walzen senkrecht übereinander angeordnet sind und der feinteilige pulverförmige Stoff mittels mindestens einer Eintragsschnecke (6) in den Walzenspalte eingetragen wird.

84 176 FH

Degussa Aktiengesellschaft
6000 Frankfurt am Main 1

Verfahren und Vorrichtung zum Granulieren von pulverförmigen Stoffen

Es ist bekannt, pulverförmige Stoffe, wie z.B. Fällungskieselsäure zu granulieren, indem man den pulverförmigen Stoff gleichzeitig vorverdichtet und formt. Die dazu verwendete Vorrichtung besteht aus einer in einem Gehäuse angeordneten mit einer Saugvorrichtung in Verbindung stehenden Filterwalze und einer im Gehäuse parallel zu ihr angeordneten gegenläufigen zweiten Walze mit einer Profilierung, wobei der die Walze zusammenhaltende Druck durch regelbare Andruckerzeuger konstant gehalten wird (DE-PS 18 07 714).

Das bekannte Verfahren hat den Nachteil, daß seine Leistungssteigerung begrenzt ist. Von weiterem Nachteil ist, daß schwankende Schüttdichten der zu granulierenden Pulver die Granulierleistung verändern, weil der Pulvereintrag nur über Selbsteinsaugung erfolgt.

Aufgabe der Erfindung ist es, eine Möglichkeit zu finden, mit der die Leistungsfähigkeit der bekannten Vorrichtung über das bekannte Maß hinaus gesteigert werden kann.

Gegenstand der Erfindung ist ein Verfahren zum kontinuierlichen Vorverdichten sowie gleichzeitigem Formen von feinteiligen pulverförmigen Stoffen, insbesondere von gefällter

-4-

84 176 FH — 4. —

Kieselsäure, zu Presslingen durch Anwendung von Unterdruck und mechanischem Druck an rotierenden Walzen, wobei der feinteilige pulverförmige Stoff auf einer zumindest teilweise in ihm rotierenden Filterwalze durch einen von deren poröser Mantelfläche ausgehenden Gassog zu einem Walzenbelag vorverdichtet und dieser mittels einer auf ihn einwirkenden gegenläufigen zweiten Walze weiter verdichtet wird und der vorverdichtete feinteilige, pulverförmige Stoff, gegebenenfalls nach Abtragen auf gleichmässige Dicke, mittels einer mit gleichmässigem Druck auf ihn einwirkenden gegenläufigen zweiten Filterwalze oder einer Walze mit geschlossenem Mantel, auf mindestens die Hälfte seines Volumens verdichtet und durch eine auf mindestens einer der Walzen angeordnete Profilierung zu Preßlingen mit definiertem Druckfestigkeitsbereich verformt wird, welches dadurch gekennzeichnet ist, daß man den feinteiligen, pulverförmigen Stoff mittels mindestens einer Eintragsschnecke in den Walzenspalt einträgt, wobei die Walzen derart zueinander angeordnet sind, daß ihre Achsen senkrecht übereinander liegen.

Ein weiterer Gegenstand der Erfindung ist eine Vorrichtung zur Durchführung des Verfahrens nach Anspruch 1, bestehend aus einer in einem Gehäuse angeordneten, mit einer Saugvorrichtung in Verbindung stehenden Filterwalze und einer im Gehäuse parallel zu ihr angeordneten gegenläufigen zweiten Walze mit porösem oder geschlossenem Mantel, wobei der Abstand zwischen den vom Walzenspalt abgekehrten Mantelfläche von porösen Walzen und den Gehäusewänden wesentlich, z.B. mindestens dreimal, grösser ist als der Walzenspalt, wobei eine auf mindestens einer der Walzen befindliche, die Form der Presslinge bestimmende Profilierung und ein mit den Lagern mindestens einer Walze verbundener, auf konstant bleibenden Druck regelbarer Anpreßdruckerzeuger angeordnet sind, welche dadurch gekennzeichnet ist, daß die Achsen der Walzen senkrecht übereinander und in dem Walzenspalt das offene Ende mindestens einer Eintragsschnecke angeordnet sind.

Die Walzen der Granuliervorrichtung haben bei der erfindungsgemäßen Anordnung zwei Funktionen. Einmal soll das pulverförmige Gut kompaktiert werden und zum anderen Mal soll die mit dem pulverförmigen Gut eingebrachte Luft über die Filterwalze entfernt werden.
Die Filterwalze kann zum Beispiel mit Sintermetall bespannt sein.

In einer vorteilhaften Ausführung der Erfindung kann der Mantel der Eintragsschnecke aus Sintermetall gefertigt sein.

Das erfindungsgemäße Verfahren und die erfindungsgemäße Vorrichtung weisen den Vorteil auf, daß schwankende Pulverdichten durch Veränderung der Schneckendrehzahlen ausgeglichen werden. Ein Eingriff in den Ablauf der Granulierung ist dann nicht mehr notwendig.

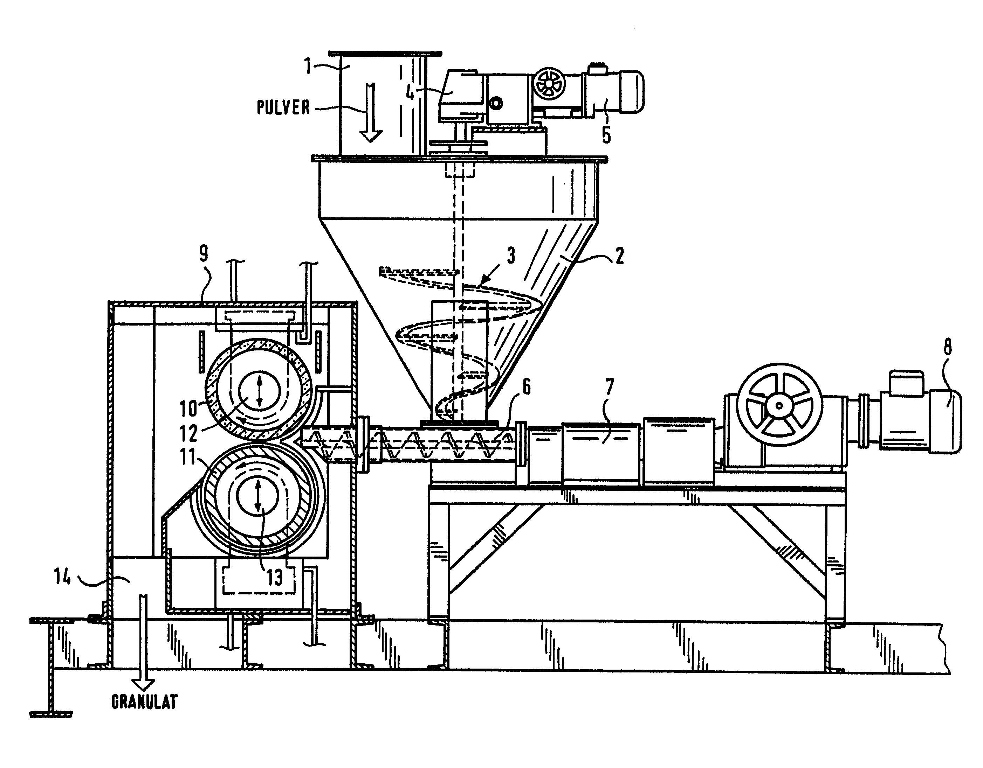

Das erfindungsgemäße Verfahren und die erfindungsgemäße Vorrichtung werden anhand der Zeichnung näher erläutert:

Pulverförmige Fällungskieselsäure wird durch die Öffnung 1 in den Trichter 2 gegeben und dort mittels dem wendelförmig gestalteten Rührer 3 aufgerührt. Der Rührer 3 wird über das Getriebe 4 durch den Motor 5 angetrieben.

Die aufgerührte Fällungskieselsäure fällt durch den Trichter 2 in die waagerecht angeordnete Doppelförderschnecke 6. Die Doppelförderschnecke 6 wird über das Getriebe 7 durch den Motor 8 angetrieben.

Die Fällungskieselsäure wird mittels der Doppelförderschnecke 6 in die Granuliervorrichtung 9 transportiert und dort in den Walzenspalt zwischen den Walzen 10 und 11 eingetragen. Die Walzen 10 und 11 sind in dem Gehäuse der Granuliervorrichtung 9 waagerecht angeordnet, wobei die Achsen 12 und 13 der beiden Walzen 10 und 11 senkrecht übereinander angeordnet sind.

Die Walze 10 besteht aus einem Walzengerüst, auf dem ein Walzenmantel aus Sintermetall aufgespannt ist, und wird mit Vakuum beaufschlagt. Die Walze 11 weist eine profilierte Oberfläche auf. Beide Walzen sind beweglich gelagert, wobei ein isodynamischer Anpressdruck durch eine hydraulische Anpreßvorrichtung erzielt wird.

Bei dem Passieren des Walzenspaltes zwischen den Walzen 10 und 11 wird die pulverförmige Fällungskieselsäure granuliert und fällt durch die Öffnung 14 aus der Granuliervorrichtung heraus.

Die folgenden Versuche wurden mit den Kieselsäuren VN 3 und Sipernat 22 nach kräftiger Auflockerung auf dem ind der Zeichnung dargestellten Walzengranulator durchgeführt.

84 176 FH          - 7. -

Während der Versuche wurde der Walzenspalt von 3 mm auf 5 mm verbreitert und die Produktzuteilung in die Schneckeneinspeisung durch einen Rührer im Vorratsbehälter unterstützt.

Die Versuchungsbedingungen und die Versuchsergebnisse sind in der Tabelle 1 aufgelistet.

Als Ergebnis der Versuche kann festgehalten werden, daß die Schneckeneinspeisung für die Zwangsförderung von VN 3 und Sipernat 22 in den Walzenspalt äußerst effektiv eingesetzt werden kann. Die Förderleistung mit diesen Kieselsäuren ist nicht an einen hohen Produktstau im Walzenspalt gebunden, aber äußerst abhängig von der Art der Produktzuteilung in die Schneckeneinspeisung in Form von Eintragshilfen, wie z.B. Rührer mit offener Wendel (Tabelle 1, Spalte 9).

Die Auswirkung der auftretenden Förderkräfte auf die Produkt-Qualität scheinen vernachlässigbar zu sein, da bei VN 3 zwischen dem Ausgangsmaterial und dem zweimal geförderten Produkt in den analytischen Werten einschließlich der DBP-Aufnahme keine Unterschiede festgestellt werden konnten (Tabelle 1, Spalte 15). Bei der Kieselsäure Sipernat 22 zeigen die analytischen Werte eine offensichtliche Verschiebung der Kornverteilung in den Feinbereich (Tabelle 1, Spalte 14), ohne das die Saugfähigkeit - ausgedrückt in Prozent-DBP-Aufnahme - beeinträchtigt wurde (Tabelle 1, Spalte 15).

Die verwendete Kieselsäure VN 3 ist eine Fällungskieselsäure. Die verwendete Kieselsäure Sipernat 22 ist eine sprühgetrocknete Fällungskieselsäure.

Tabelle 1

| 1 Produkt Daten | 2 Walzen Ø mm | 3 Granulator Walzenlänge mm | 4 Walspalt mm | 5 Dreh U -min | 6 Förderschnecken (2) Schn Ø mm | 7 Drehzahl U -min | 8 Strom aufn. A | 9 Rührer -aus +ein | 10 Förderleistung kg -h | 11 Analysen Schüttgewicht g/l | 12 DIN g/l | 13 Werte Stampfgewicht DIN g/l | 14 SR Alp 63µm % | 15 DBP-Aufn. % | 16 Wassergehalt % | 17 Bemerkung |
|---|---|---|---|---|---|---|---|---|---|---|---|---|---|---|---|---|
| VN 3 Fällungskieselsäure | - | - | - | - | - | - | - | - | - | 205 | 133 | 217 | 4,9 | 231 | 7,6 | |
| VN 3 ① | 150 | 75 | 3 | 8 | 40 | 55 | 1,04 | + | 23 | 173 | 147 | 200 | 6,0 | 232 | 6,8 | Klumpen nicht hart |
| VN 3 ② | 150 | 75 | 5 | 8 | 40 | 55 | 1,03 | + | 26 | 170 | 143 | 208 | 6,0 | 232 | 7,2 | Klumpen nicht hart |
| Sipernat 22 Original | - | - | - | - | - | - | - | - | - | 226 | 213 | 294 | 76 | 265 | 5,4 | °∞ |
| Sipernat 22 ① | 150 | 75 | 3 | 8 | 40 | 44 | 1,0 | - | 21 | 226 | 213 | 294 | 75 | 265 | 5,4 | - |
| Sipernat 22 ② | 150 | 75 | 3 | 8 | 40 | 55 | 1,03 | + | 28,5 | 200 | 166 | 227 | 50 | 267 | 5,5 | Schollen nicht hart |
| Sipernat 22 ③ | 150 | 75 | 5 | 8 | 40 | 55 | 1,04 | + | 31 | 190 | 147 | 208 | 55 | 268 | 5,4 | Schollen nicht hart |

Spalte 11: Schüttgewichts-Best. in 600 ml Gefäß, Abm.: $\emptyset$ = 85 mm, $h$ = 130 mm.

01 84 176 FH

Degussa Aktiengesellschaft
6000 Frankfurt am Main 1

Verfahren und Vorrichtung zum Granulieren von
pulverförmigen Stoffen

<u>Patentansprüche</u>

1. Verfahren zum kontinuierlichen Vorverdichten **sowie**
gleichzeiten Formen von feinteiligen pulverförmigen
Stoffen, insbesondere von gefällter Kieselsäure, **zu**
Preßlingen durch Anwendung von Unterdruck und mechanischem Druck an rotierenden Walzen, wobei der feinteilige pulverförmige Stoff auf einer zumindestens
teilweise in ihm rotierenden Filterwalze durch einen
von deren poröser Mantelfläche ausgehenden Gassog
zu einem Walzenbelag vorverdichtet und dieser mittels
einer auf ihn einwirkenden gegenläufigen zweiten **Walze**
weiter verdichtet wird, und der vorverdichtete, feinteilige, pulverförmige Stoff, gegebenenfalls nach Abtragen auf gleichmässige Dicke, mittels einer mit
gleichmässigem Druck auf ihn einwirkenden gegenläufigen
zweiten Filterwalze oder einer Walze mit geschlossenem
Mantel, auf mindestens die Hälfte seines Volumens verdichtet und durch eine auf mindestens einer der **Walzen**
angeordneten Profilierung zu Presslingen mit definiertem Bruchfestigkeitsbereich verformt wird, <u>dadurch ge-</u>
<u>kennzeichnet,</u> daß man den feinteiligen pulverförmigen
Stoff mittels mindestens einer Eintragsschnecke in den

-2-

01 84 176 FH          -  2.  -

Walzenspalte einträgt, wobei die Walzen derart zu einander angeordnet sind, daß ihre Achsen senkrecht übereinanderliegen.

2. Vorrichtung zur Durchführung des Verfahrens nach Anspruch 1, bestehend aus einer in einem Gehäuse angeordneten, mit einer Saugvorrichtung in Verbindung stehenden Filterwalze und einer im Gehäuse parallel zu ihr angeordneten gegenläufigen zweiten Walze mit porösem oder geschlossenem Mantel, wobei der Abstand zwischen den vom Walzenspalt abgekehrten Mantelfächen von porösen Walzen und den Gehäusewänden wesentlich, z.B. mindestens dreimal, grösser ist als der Walzenspalt, wobei eine auf mindestens einer der Walzen befindliche, die Form der Preßlinge bestehenden Profilierung und ein mit den Lagern mindestens einer Walze verbundener, auf konstant bleibendem Druck regelbarer Anpreßdruckerzeuger angeordnet sind, dadurch gekennzeichnet, daß die Achsen der Walzen senkrecht übereinander und in dem Walzenspalt das offene Ende mindestens einer Eintragsschnecke angeordnet sind.

-3-

PULVER

GRANULAT

Europäisches
Patentamt

**EUROPÄISCHER RECHERCHENBERICHT**

0173061
Nummer der Anmeldung

EP 85 10 8988

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl.4) |
|---|---|---|---|
| Y | DE-A-1 778 089 (ALEXANDERWERK A.G.) <br> * seite 1, zeile 1 - Seite 2, Zeile 5; Abbildung * <br><br> --- | 1,2 | B 01 J 2/22 <br> C 09 C 1/30 |
| Y | FR-A-2 024 818 (DEGUSSA) <br> * Seite 14, Zeile 1 - Seite 16, Zeile 32; Abbildungen 1,2 * & DE - B - 1 807 714 (Kat. D) <br><br> ----- | 1,2 | |

RECHERCHIERTE
SACHGEBIETE (Int. Cl.4)

B 01 J
C 09 C

Der vorliegende Recherchenbericht wurde für alle Patentansprüche erstellt.

| Recherchenort <br> DEN HAAG | Abschlußdatum der Recherche <br> 16-08-1985 | Prüfer <br> PYFFEROEN K. |
|---|---|---|